# EUROPEAN PATENT SPECIFICATION

(11) **EP 2 176 914 B1**
(45) Date of publication and mention of the grant of the patent: **26.10.2011**
(21) Application number: 08792484.1
(22) Date of filing: 08.08.2008
(51) Int. Cl.: H01M 8/10, H01M 4/86, H01M 4/90, H01M 4/92, B01J 23/88, B01J 23/28, B01J 23/46

(54) **FUEL CELL ELECTRODE CATALYST, METHOD FOR EVALUATING PERFORMANCE OF OXYGEN-REDUCING CATALYST, AND SOLID POLYMER FUEL CELL COMPRISING THE FUEL CELL ELECTRODE CATALYST**
BRENNSTOFFZELLENELEKTRODENKATALYSATOR ZUR BEURTEILUNG DER LEISTUNG EINES SAUERSTOFFREDUZIERENDEN KATALYSATORS UND FESTPOLYMERBRENNSTOFFZELLE MIT DEM BRENNSTOFFZELLENELEKTRODENKATALYSATOR
CATALYSEUR D'ELECTRODE DE PILE A COMBUSTIBLE, PROCEDE SERVANT A EVALUER LA PERFORMANCE D'UN CATALYSEUR DE REDUCTION DE L'OXYGENE ET PILE A COMBUSTIBLE A POLYMERE SOLIDE COMPRENANT LE CATALYSEUR D'ELECTRODE DE PILE A COMBUSTIBLE

(30) Priority: 09.08.2007 JP 2007208411
(43) Date of publication of application: 21.04.2010
(73) Proprietor: Toyota Jidosha Kabushiki Kaisha, Toyota-shi, Aichi 471-8571 (JP)
(72) Inventor: UENO, Yukiyoshi, Toyota-shi Aichi 471-8571 (JP); IISAKA, Hirofumi, Toyota-shi Aichi 471-8571 (JP)
(74) Representative: Kuhnen & Wacker
(86) International application number: PCT/JP2008/064607
(87) International publication number: WO 2009/020247

(56) References cited:
- EP-A- 1 750 318
- EP-A- 1 772 916
- EP-A- 1 786 053
- WO-A-2006/137302
- DE-A1- 19 644 628
- US-A1- 2004 096 728
- US-A1- 2007 078 052

## Description

### Technical Field

The present invention relates to a fuel cell electrode catalyst comprising at least one transition metal element and at least one chalcogen element, which can replace a conventional platinum catalyst, a solid polymer fuel cell comprising such fuel cell electrode catalyst and a method for manufacturing such fuel cell electrode atalyst.

### Background Art

Anode catalysts used for polymer electrolyte fuel cells are mainly platinum and platinum-alloy-based catalysts. Specifically, catalysts in which a platinum-containing noble metal is supported by carbon black have been used. In terms of practical applications of polymer electrolyte fuel cells, one problem relates to the cost of materials. A means to solve such problem involves reduction in the platinum content.

Meanwhile, it has been known that when oxygen (O₂) is electrolytically reduced, superoxide is generated as a result of one-electron reduction, hydrogen peroxide is generated as a result of two-electron reduction, or water is generated as a result of four-electron reduction. When voltage reduction occurs for some reason in a fuel cell stack using, as an electrode, a platinum or platinum-based catalyst, four-electron reduction performance deteriorates, resulting in two-electron reduction. Accordingly, hydrogen peroxide is generated, causing MEA deterioration.

Recently, low-cost fuel cell catalysts have been developed via a reaction that produces water as a result of four-electron reduction of oxygen, which will result in elimination of the need for expensive platinum catalysts.

Non-Patent Document I described below discloses that a catalyst comprising a chalcogen element is excellent in terms of four-electron reduction performance and suggests that such catalyst be applied to fuel cells.

Likewise, Patent Document 1 described below discloses, as a platinum (Pt) catalyst substitute, an electrode catalyst comprising at least one transition metal and a chalcogen. An example of a transition metal is Ru and an example of a chalcogen is S or Se. It is also disclosed that, in such case, the Ru : Se molar ratio is from 0.5:1 to 2:1 and the stoichiometric number "n" of (Ru)nSe is 1.5 to 2.

Further, Patent Document 2 described below discloses, as a Pt catalyst substitute, a fuel cell catalyst material comprising a transition metal that is either Fe or Ru, an organic transition metal complex containing nitrogen, and a chalcogen component such as S.

In addition, Non-Patent Document 1 described below discloses an Mo-Ru-Se ternary electrode catalyst and a method for synthesizing the same.

Further, Non-Patent Document 2 described below discloses Ru-S, Mo-S, and Mo-Ru-S binary and ternary electrode catalysts and methods for synthesizing the same.

Furthermore, Non-Patent Document 3 described below discloses Ru-Mo-S and Ru-Mo-Se ternary chalcogenide electrode catalysts.
Patent Document 1: JP Patent Publication (Kohyo) No. 2001-502467 A
Patent Document 2: JP Patent Publication (Kohyo) No. 2004-532734 A
Non-Patent Document 1: Electrochimica Acta, vol. 39, No. 11/12, pp. 1647-1653, 1994
Non-Patent Document 2: J. Chem. Soc., Faraday Trans., 1996, 92 (21), 4311-4319
Non-Patent Document 3: Electrochimica Acta, vol. 45, pp. 4237-4250, 2000

Document US200496728 discloses a RuSe catalyst for a fuel cell, wherein Ru can be replaced by Mo, Fe, Co, Ni or W and Se can be replaced by S (abstract), said fuel cell being a PEM fuel cell [0005]. The catalyst is prepared by dissolving Se and Ru(CO)₁₂, obtaining a precipitate and heating to a temperature of 600°C under inert atmosphere [0014-0018].

Document Pe1772916 discloses a cathode catalyst for a PEM fuel cell comprising a materiel M selected from Ru, Rh and combinations thereof and a material Ch selected from S, Se, Te and combinations thereof (abstract) [0065]. The catalyst can be prepared by mixing ruthenium carbonyl and sulfur, heating from 100°C to 170°C, filtering, drying and heat treating at 200°C to 250°C under nitrogen atmosphere [0025-0029].

Document EP1786053 discloses a cathode catalyst for a PEM fuel cell, said catalyst including Ru-Se (abstract) [0004]. The catalyst can be prepared by mixing ruthenium carbonyl and Se, performing two heat treatments at temperatures of 100°C to 450°C [0015-0017, 0031].

Document EP1750318 discloses a cathode catalyst for a PEM fuel cell, said catalyst including Ru, M and Te, wherein M is Mo, W or a mixture thereof (abstract) [0001, 0003]. The catalyst can be prepared by mixing ruthenium carbonyl, molybdenum carbonyl and Te, heating at 140°C to 350°C and firing at 200°C [0028, 0030, 0047].

### Disclosure of the Invention

### Problem to be solved by the Invention

The catalysts disclosed in Patent Document 1 and Non-Patent Documents 1, 2, and 3 are insufficient in terms of four-electron reduction performance. Therefore, the development of high-performance catalysts and of an index for performance evaluation that is useful for high-performance catalyst design has been awaited.

### Means for Solving Problem

The present inventors have found that, in the case of a fuel cell electrode catalyst comprising a transition metal element and a chalcogen element, the ratio of the coordination number of one element to that of the other is closely related to the oxygen reduction performance of such catalyst. Further, they have found that the above problem can be solved by designating the coordination number ratio as an index for performance evaluation that is useful for catalyst design. This has led to the completion of the present invention.

Specifically, in a first aspect, the present invention relates to a fuel cell electrode catalyst comprising a transition metal element and a chalcogen element,
wherein the transition metal element contains ruthenium (Ru) and molybdenum (Mo), the chalcogen element is sulfur (S) and the value of the ratio of sulfide to sulfate obtained Ka XANES analysis is 0.27 to 0.71.

Herein, the "transition metal element-chalcogen element coordination number" and the "transition metal element- chalcogen element-oxygen coordination number" of an electrode catalyst are determined not only based on the composition ratio of a transition metal element to a chalcogen element but also based on the nature of a crystal of catalyst particles comprising both elements, the particle size thereof, and the like. In addition, it is possible to change crystallographic activity, particle-size-dependent activity, and the like of such catalyst particles mainly based on conditions of baking after catalyst preparation.

In a second aspect, the present invention relates to a solid polymer fuel cell comprising the above fuel cell electrode catalyst.

In a third aspect, the present invention relates to a method for manufacturing a fuel cell electrode catalyst comprising a transition metal etement and a chalcogen element, wherein the transition metal element contains ruthenium (Ru) and molybdenum (Mo) and the chalcogen element is sulfur (S), which comprises a step of selecting a composition of the catalyst and a step of backing so as to adjust the value of the ratio of sulfide to sulfate obtained via XANES analysis in the range of 0.27 to 0.71.

### Effects of the Invention

The fuel cell electrode catalyst of the present invention has a higher level of four-electron reduction performance and higher activity than a conventional transition metal-chalcogen element-based catalyst, and thus it can serve as a platinum catalyst substitute.

### Brief Description of the Drawings

Fig. 1 shows an MS curve for RuMoS/C.
Fig. 2 shows an MS curve for RuS/C.
Fig. 3 shows an MS curve for MoS/C.
Fig. 4 shows XANES analysis results for RuMoS/C (treated under a heat treatment condition of 300°C x 1 b).
Fig. 5 shows XANES analysis results for RuMoS/C (treated under a heat treatment condition of 350°C x 1 h).
Fig. 6 shows XANES analysis results for RuMoS/C (treated under a heat treatment condition of 500°C x 1 h).
Fig. 7 shows XANES analysis results for RuMoS/C (treated under a heat treatment condition of 350°C x 2 h).
Fig. 8 shows XANES analysis results for MoS/C.
Fig. 9 shows XANES analysis results for RuS/C.
Fig. 10 shows results obtained by a rotating disk electrode (RDE) evaluation method whereby the above catalyst materials (treated under different heat treatment conditions) were evaluated in relation to the oxygen reduction performance.
Fig. 11 shows the correlation between the ratio of sulfide to sulfate and the oxygen reduction current value.
Fig. 12 shows results obtained by a rotating disk electrode (RDE) evaluation method whereby the above catalyst materials having different sulfur contents were evaluated in relation to the oxygen reduction performance of RuMoS/C.

### Best Mode for Carrying Out the Invention

Hereinafter, the present invention is described in more detail with reference to the Examples and the Comparative Examples.

### [Catalyst preparation]

Ketjen Black (trade name) was used as a carbon carrier. Ruthenium carbonyl, molybdenum carbonyl, and sulfur were heated at 140°C in the presence of argon, followed by cooling. Thereafter, the resultant was washed with acetone and filtered. The obtained filtrate containing RuMoS/C (Ru : Mo : S = 5:1:5; 60 wt%) was baked at 350°C for 2 hours. Thus, a chalcogenide-based catalyst was prepared.

For comparison, RuS/C (Ru : S = 1:1; 60 wt%) was prepared in the same manner as that described above, except that molybdenum carbonyl was not used. Likewise, MoS/C (Mo : S = 1:1; 60 wt%) was prepared in the same manner as that described above, except that ruthenium carbonyl 1 was not used.

### [Desorption of a chalcogen element by heat treatment]

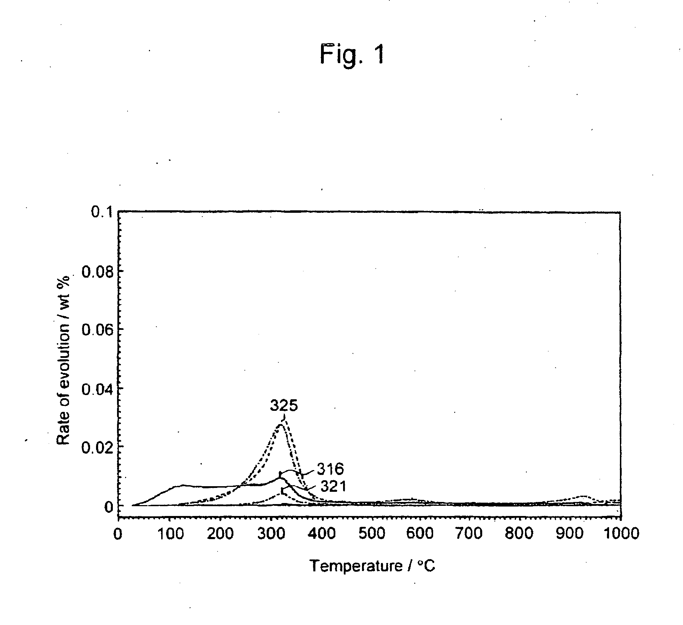

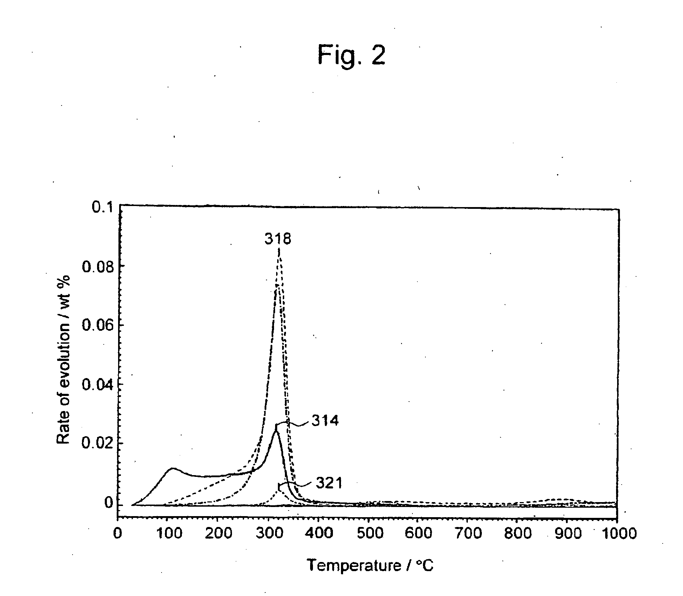

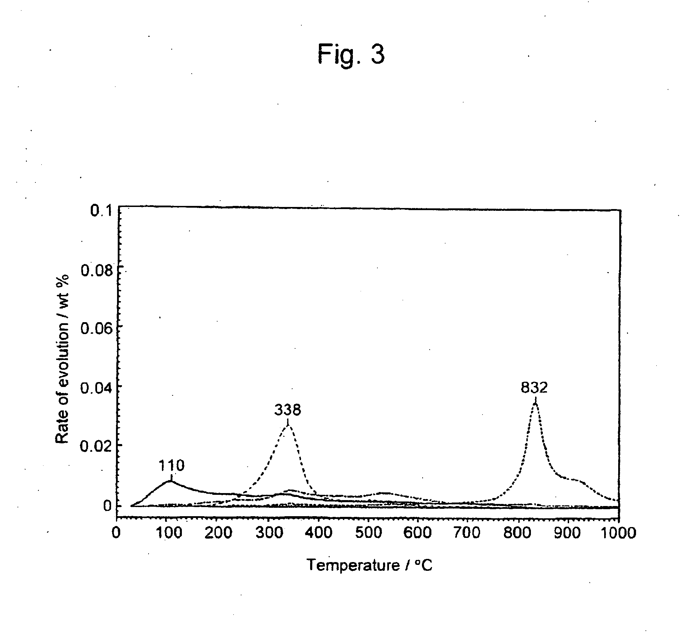

MS curves derived from the above RuMoS/C, RuS/C, and MoS/C in helium gas were obtained. Fig. 1 shows an MS curve for RuMoS/C. The results of fig. 1 indicate that the content of a sulfur component desorbed as a result of temperature increase is small. Fig. 2 shows an MS curve for RuS/C. The results of fig. 2 indicate that the content of a sulfur component desorbed as a result of temperature increase is large. Fig. 3 shows an MS curve for MoS/C. The results of fig. 3 indicate that the content of a sulfur component desorbed as a result of temperature increase is small. Based on the above results, it is understood that desorption of a sulfur component is suppressed by adding Mo to a catalyst component, and thus, the properties of a chalcogenide-based catalyst can be exerted. In addition, the effects of adding Mo to a chalcogenide-based catalyst were confirmed by comparing the oxygen reduction current value of RuMoS/C with that of RuS/C.

### [Structural analysis]

The above synthesized chalcogenide-based catalyst materials were subjected to structural analysis via XANES. It has been found that a chalcogenide-based catalyst contains a transition metal chalcogenide and a transition metal chalcogenide acid. In the case of the above RuMoS/C, a sulphide and a sulfate are contained.

### [Structural analysis and performance evaluation of catalyst materials treated under different heat treatment conditions]

Chalcogenide-based catalyst materials (Ru : Mo : S = 5:1:5 for each) were prepared in the same manner as that described above, provided that each material was treated under a different heat treatment condition (300°C x 1 h, 350°C x 1 h, 500°C x 1 h, or 350°C x 2 h). For comparison, MoS/C and RuS/C obtained above were used.

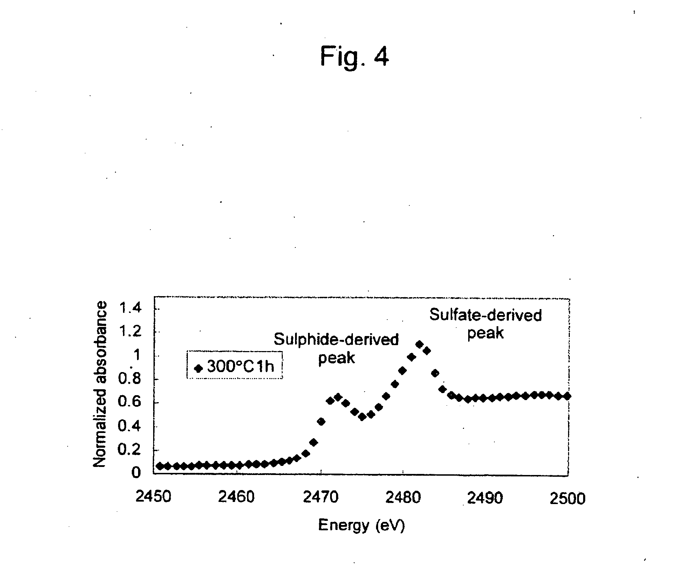

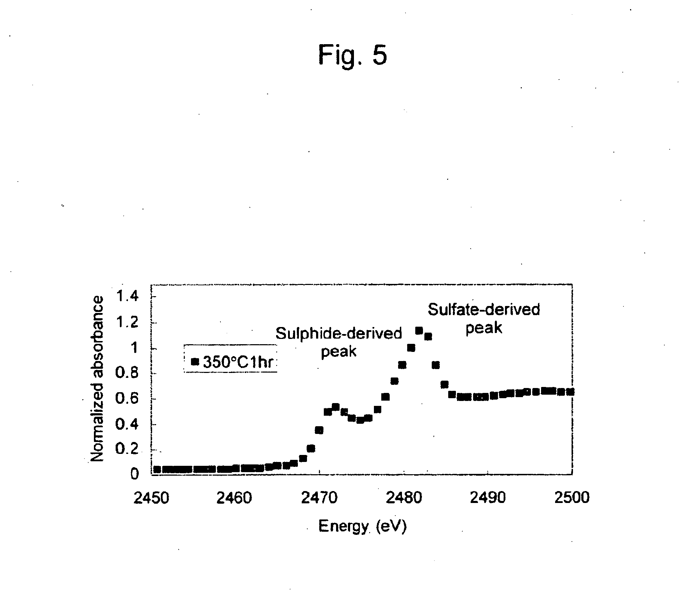

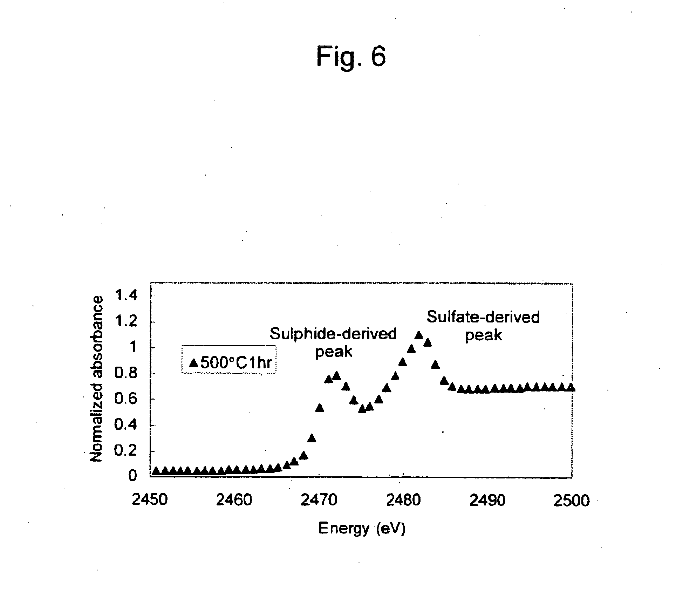

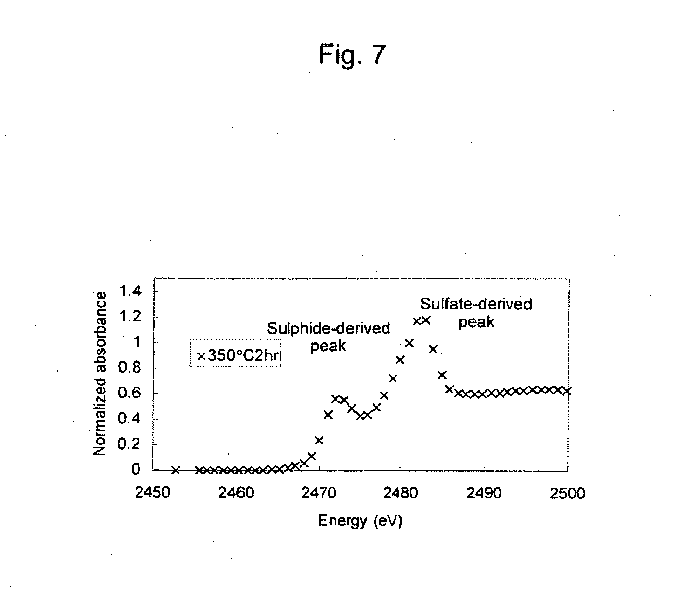

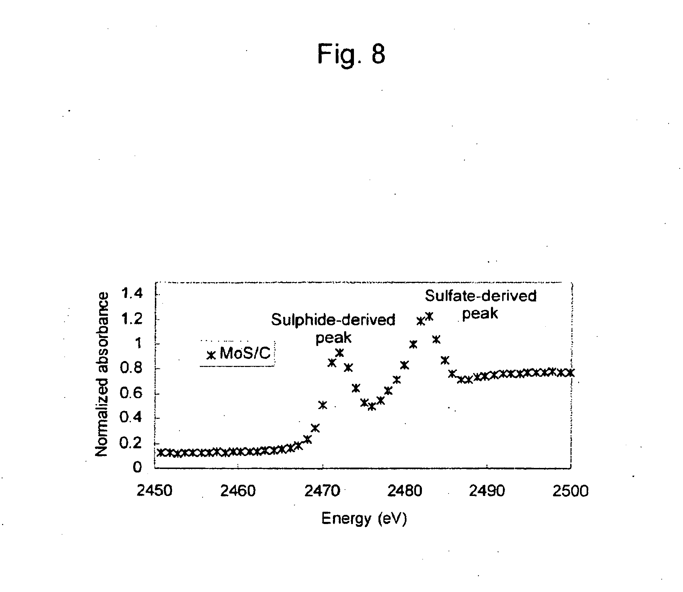

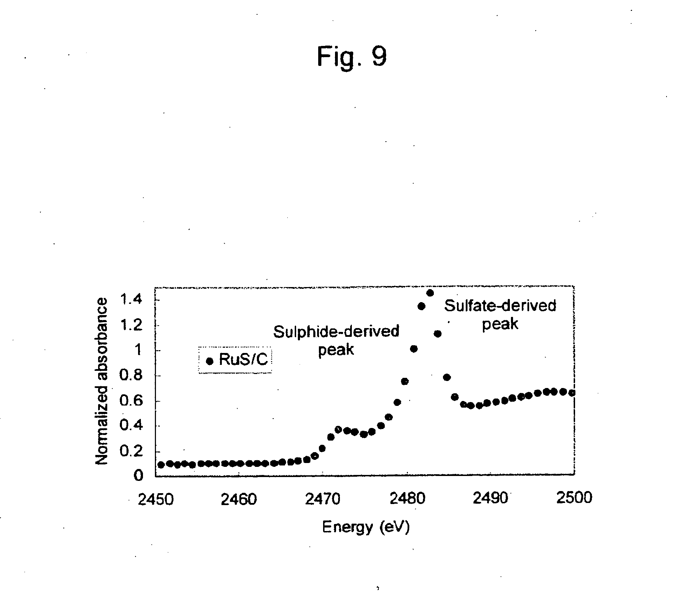

Figs. 4 to 9 show structural analysis results for chalcogenide-based catalysts (treated under different heat treatment conditions) obtained via. Fig. 4 shows structural analysis results for RuMoS/C treated under a heat treatment condition of 300°C x 1 h obtained via XANES. Fig. 5 shows XANES analysis results for RuMoS/C treated under a heat treatment condition of 350°C x 1 h. Fig. 6 shows XANES analysis results for RuMoS/C treated under a heat treatment condition of 500°C x 1 h. Fig. 7 shows XANES analysis results for RuMoS/C treated under a heat treatment condition of 350°C x 2 h. Fig. 8 shows XANES analysis results for MoS/C. Fig. 9 shows XANES analysis results for RuS/C.

Based on the results shown in figs. 4 to 9, it is understood that, in the case of each catalyst material, the sulphide-derived peak and the sulfate-derived peak are observed and the peak intensities vary.

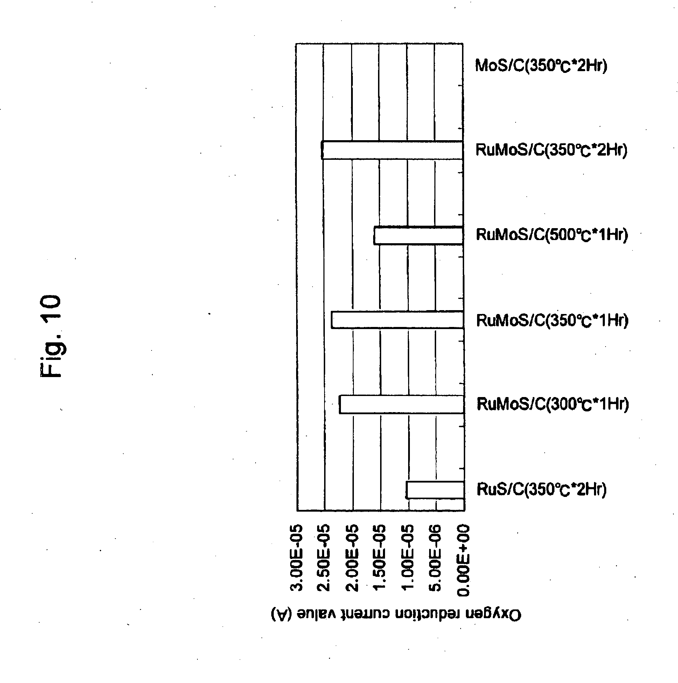

Fig. 10 shows results obtained by a rotating ring-disk electrode (RDE) evaluation method whereby the above catalyst materials (treated under different heat treatment conditions) were evaluated in relation to the oxygen reduction performance. Note that RuS/C and MoS/C were used as reference substances.

The correlation between the following factors was examined: the proportions of sulfide to sulfate obtained from figs. 4 to 9; and the results of oxygen reduction performance evaluation obtained from fig. 10. Herein, regarding sulfide and sulfate, the normalized absorbances shown in figs. 4 to 9 were calculated to derive the abundances thereof.

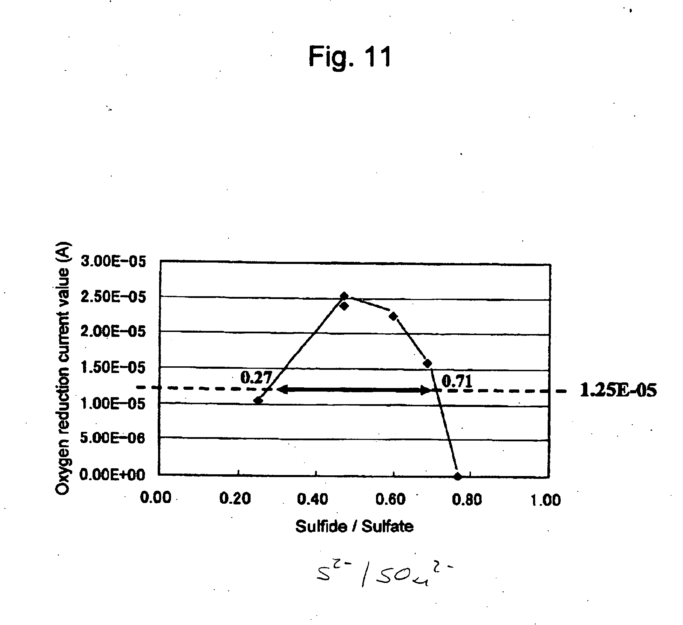

Fig. 11 shows the correlation between the ratio of sulfide to sulfate and the oxygen reduction current value. Based on the results shown in fig. 11, it is understood that an excellent oxygen-reducing catalyst is obtained when the value of sulfide / sulfate is 0.27 to 0.71.

### [Performance evaluation of catalyst materials with different S contents]

Catalyst materials were prepared in the same manner as that described above, provided that each material had a different sulfur content (0, 20, 45, or 71 mop%).

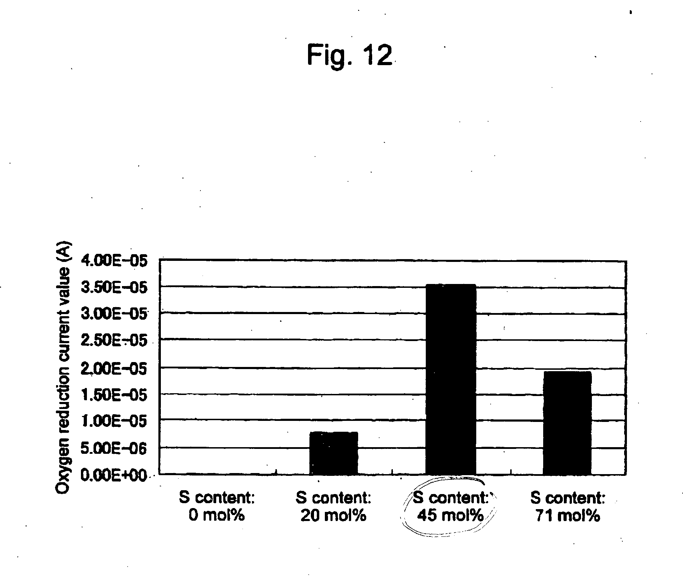

Fig. 12 shows results obtained by a rotating ring-disk electrode (RDE) evaluation method whereby the above catalyst materials having different sulfur contents were evaluated in relation to the oxygen reduction performance of RuMoS/C. Based on the results shown in fig. 12, it is understood that catalyst performance is expressed with the addition of sulfur and that catalyst performance varies depending on the sulfur content. Accordingly, it is understood that it is necessary to know the binding state of sulfur in a chalcogenide-based catalyst.

### Industrial Applicability

The fuel cell electrode catalyst of the present invention has a high level of four-electron reduction performance and high activity, and thus it can serve as a platinum catalyst substitute. Therefore, the present invention contributes to the practical and widespread use of fuel cells.

## Claims

1. A fuel cell electrode catalyst comprising a transition metal element and a chalcogen element, wherein the transition metal element contains ruthenium (Ru) and molybdenum (Mo), the chalcogen element is sulfur (S), and the value of the ratio of sulfide to sulfate obtained via XANES analysis is 0.27 to 0.71.

2. A solid polymer fuel cell, which comprises the fuel cell electrode catalyst according to claim 1.

3. A method for manufacturing a fuel cell electrode catalyst comprising a transition metal element and a chalcogen element, wherein the transition metal elements contains ruthenium (Ru) and molybdenum (Mo), and the chalcogen element is sulfur (S), which comprises a step of selecting a composition of the catalyst and a step of baking so as to adjust the value of the ratio of sulfide to sulfate obtained via XANES analysis in the range of 0.27 to 0.71.

## Patentansprüche

1. Brennstoffzellen-Elektrodenkatalysator, ein Übergangsmetallelement und ein Chalcogenelement aufweisend, wobei das Übergangsmetallelement Ruthenium (Ru) und Molybdän (Mo) enthält, das Chalcogenelement Schwefel (S) ist, und der über eine XANES-Analyse erhaltene Wert des Verhältnisses von Sulfid zu Sulfat 0,27 bis 0,71 ist.

2. Festpolymer-Brennstoffzelle, die den Brennstoffzellen-Elektrodenkatalysator nach Anspruch 1 aufweist.

3. Verfahren zum Herstellen eines Brennstoffzellen-Elektrodenkatalysators, der ein Übergangsmetallelement und ein Chalcogenelement aufweist, wobei die Übergangsmetallelemente Ruthenium (Ru) und Molybdän (Mo) enthält, und das Chalcogenelement Schwefel (S) ist, wobei das Verfahren einen Schritt, in dem eine Zusammensetzung des Katalysators ausgewählt wird, und einen Brennschritt aufweist, um den über eine XANES-Analyse erhaltenen Wert des Verhältnisses von Sulfid zu Sulfat auf einen Bereich von 0,27 bis 0,71 einzustellen.

## Revendications

1. Catalyseur d'électrode de pile à combustible comprenant un élément de métal de transition et un élément de chalcogène, dans lequel l'élément de métal de transition contient du ruthénium (Ru) et du molybdène (Mo), l'élément de chalcogène est le soufre (S), et la valeur du rapport du sulfure au sulfate obtenu via une analyse XANES est de 0,27 à 0,71.

2. Pile à combustible de polymère solide, laquelle comprend le catalyseur d'électrode de pile à combustible selon la revendication 1.

3. Procédé de fabrication d'un catalyseur d'électrode de pile à combustible comprenant un élément de métal de transition et un élément de chalcogène, dans lequel l'élément de métal de transition contient du ruthénium (Ru) et du molybdène (Mo), et l'élément de chalcogène est le soufre (S), lequel comprend une étape de sélection d'une composition du catalyseur et une étape de cuisson afin d'ajuster la valeur du rapport de sulfure au sulfate obtenu via une analyse XANES dans l'intervalle de 0,27 à 0,71.
